# EUROPÄISCHE PATENTSCHRIFT

(11) **EP 2 192 298 B1**
(45) Veröffentlichungstag und Bekanntmachung des Hinweises auf die Patenterteilung: **21.01.2015**
(21) Anmeldenummer: 09014142.5
(22) Anmeldetag: 12.11.2009
(51) Int. Cl.: F03D 7/02, F03D 11/00, F03D 7/04

(54) **Windenergieanlage mit einer zentralen Steuerungseinrichtung und einer Steuerungseinheit im Rotor sowie Verfahren zum Betreiben einer derartigen Windenergieanlage**
Wind energy assembly with a central control device and a control unit in the rotor and method for operating such a wind energy assembly
Eolienne dotée d'un dispositif de commande central et d'une unité de commande dans un rotor, ainsi que procédé de fonctionnement d'une telle éolienne

(30) Priorität: 19.11.2008 DE 102008057934
(43) Veröffentlichungstag der Anmeldung: 02.06.2010
(73) Patentinhaber: Nordex Energy GmbH, 22419 Hamburg (DE)
(72) Erfinder: Kabatzke, Wolfgang, 21502 Geesthacht (DE); Hose, Gerd, 24211 Preetz (DE)
(74) Vertreter: Hauck Patent- und Rechtsanwälte

(56) Entgegenhaltungen:
- EP-A2- 2 080 900
- WO-A1-2006/069573
- DE-U1-202005 011 896
- "Wireless Local Area Network", Wikipedia, 15. November 2007 (2007-11-15), XP055073140, Gefunden im Internet: URL:http://en.wikipedia.org/wiki/Wireless_ local_area_network [gefunden am 2013-07-26]

## Beschreibung

Die Erfindung betrifft eine Windenergieanlage mit einer Gondel, einem Rotor, der mindestens ein in seinem Blatteinstellwinkel verstellbares Rotorblatt aufweist, einer zentralen Steuerungseinrichtung zur Steuerung der Windenergieanlage und einer im Rotor angeordneten Steuerungseinheit zur Steuerung des Blatteinstellwinkels des Rotorblattes, wobei die zentrale Steuerungseinrichtung und die Steuerungseinheit im Rotor über eine Datenverbindung, die mindestens eine gondelseitige erste Sende- und Empfangseinrichtung und mindestens eine rotorseitige zweite Sende- und Empfangseinrichtung umfasst, miteinander Daten austauschen können, sowie ein Verfahren zum Betreiben einer derartigen Windenergieanlage.

Aus der Druckschrift DE 20 2005 011 896 U1 ist eine Windenergieanlage bekannt, bei der der Rotor eine Steuereinheit mit einer Verstelleinrichtung enthält, die den Blatteinstellwinkel der Rotorblätter verstellt. Die Steuereinheit ist mit einer Empfangseinrichtung verbunden, über die sie Steuersignale von einer zentralen Steuerung empfängt. Die Steuereinheit umfasst ein Störfallmodul, das bei Empfang eines Störungssignals eine Störfallrotorblattverstellung in Fahnenstellung vornimmt, um die Windenergieanlage in einen sicheren Zustand zu versetzen. Die zentrale Steuerung und die Steuereinheit im Rotor sind über eine analoge Funkverbindung verbunden. Das Störsignal wird über die Funkverbindung übertragen, wobei vorzugsweise die Unterbrechung eines kontinuierlich gesendeten Dauersignals eine Störung der Funkverbindung anzeigt.

Aus WO 2006/069573 A1 ist eine Windenergieanlage bekannt geworden, bei der eine Steuerung für Hauptkomponenten der Windenergieanlage redundant ausgebildet ist.

Aus EP 2 080 900 A2 ist eine Windenergieanlage mit mehreren Untereinheiten und ein Verfahren zu deren Betrieb bekannt geworden. Die Steuerungen können dabei in einem gemeinsamen Arbeitsmodus oder in einem isolierten Arbeitsmodus betrieben werden. In dem gemeinsamen Arbeitsmodus arbeitet eine Steuerung als Master, während die übrigen Steuerungen als Slave-Steuerungen arbeiten. In dem isolierten Arbeitsmodus ist jede Steuerung ausschließlich für ihre Steueraufgabe verantwortlich.

Davon ausgehend ist es die Aufgabe der Erfindung, eine Windenergieanlageund ein Verfahren zu deren Betrieb zur Verfügung zu stellen, die bzw. das einen zuverlässigeren und sichereren Betrieb ermöglicht.

Diese Aufgabe wird gelöst durch die Windenergieanlage mit den Merkmalen des Anspruchs 1 und durch das Verfahren zum Betreiben einer Windenergieanlage mit den Merkmalen des Anspruchs 9. Vorteilhafte Ausgestaltungen sind in den sich jeweils anschließenden Unteransprüchen angegeben.

Die erfindungsgemäße Windenergieanlage hat einen Rotor, der mindestens ein in seinem Blatteinstellwinkel verstellbares Rotorblatt aufweist, eine zentrale Steuerungseinrichtung zur Steuerung der Windenergieanlage und eine im Rotor angeordnete Steuerungseinheit zur Steuerung des Blatteinstellwinkels des Rotorblattes, wobei die zentrale Steuerungseinrichtung und die Steuerungseinheit im Rotor über eine Datenverbindung, die mindestens eine gondelseitige erste Sende- und Empfangseinrichtung und mindestens eine rotorseitige zweite Sende- und Empfangseinrichtung umfasst, miteinander Daten austauschen können und die Datenverbindung eine drahtlose Netzwerkverbindung mit einem sicherheitsgerichteten Kommunikationsprotokoll aufweist.

Der Rotor der Windenergieanlage kann eine horizontale Achse aufweisen, vorzugsweise sind drei Rotorblätter vorhanden. Die zentrale Steuerungseinrichtung steuert alle Funktionen der Windenergieanlage. Sie ist häufig auch als zentrales Hardwaresystem mit einer spezialisierten Software zur Betriebsführung ausgebildet. Die im Rotor angeordnete Steuerungseinheit befindet sich vorzugsweise in der Nabe des Rotors. Die Verstelleinrichtung für jedes Rotorblatt umfasst einen Antrieb, vorzugsweise einen Elektromotor, der über eine Antriebssteuereinheit angesteuert wird. Der Antrieb wirkt, gegebenenfalls über ein geeignetes Getriebe, auf das Rotorblatt ein, das drehbar um seine Längsachse in der Nabe gelagert ist.

Im Gegensatz zu der aus dem Stand der Technik bekannten analogen Funkverbindung kommt für die drahtlose Datenverbindung zwischen der zentralen Steuerungseinrichtung und der Steuerungseinheit im Rotor bei der Erfindung eine drahtlose Netzwerkverbindung mit einem sicherheitsgerichteten Kommunikationsprotokoll zum Einsatz. Die Verwendung einer Netzwerkverbindung erlaubt die Übertragung sehr großer Datenmengen, wodurch komplexere und insbesondere auch schnellere Steuerungs- und Regelungsvorgänge ausgeführt werden können. Durch das sicherheitsgerichtete Kommunikationsprotokoll erhöht sich die Sicherheit und Zuverlässigkeit der Datenübertragung wesentlich. Sicherheitsgerichtet bedeutet, dass das Kommunikationsprotokoll definierte Maßnahmen umfasst, die Kommunikationsfehler verhindern. Beispiele für solche Maßnahmen, die den fehlerfreien Datenaustausch sicherstellen, sind die Verwendung einer gegen Störungen toleranten Modulation und einer gezielte Reduzierung der Datenrate in definierten Schritten zur Auf rechterhaltung der Datenverbindung, wenn die Verbindung durch Störeinflüsse beeinträchtigt wird.

Durch die hohe Zuverlässigkeit der drahtlosen Netzwerkverbindung kann die Häufigkeit von Notstopps, die bei herkömmlichen Windenergieanlagen bei der überwiegenden Anzahl der Störungen der Datenverbindung ausgelöst werden, wesentlich reduziert werden. Dies hat unmittelbaren Einfluss auf die Lebensdauer der Windenergieanlage, weil jeder Notstopp eine lebensdauerrelevante Belastung für die betreffenden Komponenten darstellt.

Die drahtlose Netzwerkverbindung umfasst eine erste Sende- und Empfangseinrichtung an oder in der Gondel und eine zweite Sende- und Empfangseinrichtung an oder in dem Rotor der Windenergieanlage. Dadurch kann auch bei einer am Turmfuß angeordneten zentralen Steuerungseinrichtung eine sicherheitsgerichtete drahtlose Netzwerkverbindung mit kurzer Funkstrecke realisiert werden, was die Übertragungssicherheit verbessert.

Das Kommunikationsprotokoll kann insbesondere den Sicherheitsanforderungen nach Safety Integrity Level 3 (SIL 3) der Norm IEC 61508 und vergleichbaren Sicherheitsanforderungen genügen und entsprechend zertifiziert sein. Vergleichbare Sicherheitsanforderungen definiert etwa die Norm EN 954-1 in Kategorie 4 und die diese Vorschrift ablösende Norm ISO 13849. Durch Einhaltung dieser Normen kann die Kommunikation zwischen zentraler Steuerungseinrichtung und Steuerungseinheit die aus der Prozess- und Fertigungsindustrie bekannten höchsten Sicherheitsanforderungen erfüllen. Dies ist insbesondere für die sicherheitsrelevante Blattverstellung wichtig. Geeignete Kommunikationsprotokolle weisen unter anderem eine Zeitüberwachung (Watch-Dog), eine Kennung zwischen Sender und Empfänger, z.B. über eindeutige Kommunikationsadressen, einen optimierten Cyclic-Redundancy-Check (CRC) zur Erkennung verfälschter Datenbits eines Telegramms, eine automatische Fehlererkennung und Fehlerweiterleitung über das Netzwerk und eine automatische Wiederanlauferkennung auf. Dadurch kann sämtlichen Fehlermöglichkeiten beim Übertragen von Nachrichten wie Adressverfälschung, Verlust, Verzögerung usw. begegnet werden.

An der ersten und an der zweiten Sende- und Empfangseinrichtung ist jeweils eine Überwachungs- und Kommunikationseinrichtung angeordnet, die die ordnungsgemäße Funktion der jeweiligen Sende- und Empfangseinrichtung überwachen und im Falle eines Fehlers eine vorbestimmte Aktion einleiten kann. Die vorbestimmte Aktion kann beispielsweise das Absetzen einer Fehlermeldung, das Vorgeben einer reduzierten Leistung, das Einstellen eines Sicherheits-Blatteinstellwinkels oder die Inbetriebnahme einer Hardwarekomponente sein. Die Überwachungs- und Kommunikationseinrichtungen können aus Komponenten bestehen, die selbst die oben genannten Sicherheitsanforderungen nach den einschlägigen Normen verfüllen und gegebenenfalls entsprechend zertifiziert sind. Die Überwachungs- und Kommunikationseinrichtungen überprüfen ständig, ob die überwachten Sende- und Empfangseinrichtungen ordnungsgemäß funktionieren, d.h. insbesondere ob die Feldstärke, die Stromversorgung, der Zustand der Antennen und die Kommunikationsgeschwindigkeit innerhalb vorgegebener Toleranzbereiche liegen. Werden aufgrund einer Abweichung ein oder mehrere Fehler festgestellt, können von der zentralen Steuerungseinrichtung oder von einer der Überwachungs- und Kommunikationseinrichtungen selbst geeignete Gegenmaßnahmen getroffen werden, insbesondere ist eine rechtzeitige Umschaltung auf eine redundante Hardwarekomponente, etwa eine zweite Sende- und Empfangseinrichtung, möglich.

Erfindungsgemäß sind die beiden Überwachungs- und Kommunikationseinrichtungen über eine einen Schleifring aufweisende elektrische Leitung miteinander verbunden und zum ständigen Austausch von Statusmeldungen über die elektrische Leitung ausgebildet. Die Kommunikation über einen Schleifring zwischen Gondel und Nabe ist von herkömmlichen Windenergieanlagen bekannt und wird dort für die Übertragung von Steuerbefehlen, etwa der Vorgabe eines Blatteinstellwinkels, verwendet. Bei der Erfindung wird diese alternative Datenverbindung über den Schleifring im regulären Betrieb nur zum Austausch von Statusmeldungen zwischen den beiden Überwachungs- und Kommunikationseinrichtungen verwendet. Auf diese Weise werden unmittelbar sicherheitsrelevante Informationen nicht über die grundsätzlich störanfällige Schleifringverbindung weitergeleitet. Dadurch ist einerseits eine von der Funkverbindung unabhängige Kommunikationsmöglichkeit zwischen den beiden Überwachungs- und Kommunikationseinrichtungen geschaffen, andererseits ist dieser zusätzliche Kommunikationskanal ständig aktiv und kann bei ausfallender Funkverbindung unverzüglich auch zur Datenkommunikation verwendet werden ("hot standby").

In einer sehr vorteilhaften Ausgestaltung ist die drahtlose Netzwerkverbindung eine sogenannte Industrial Wireless Local Area Network (iWLAN)-Verbindung. Diese proprietäre Technologie kann insbesondere eine echtzeitfähige Übermittlung der Daten mittels einer als Industrial Point Coordination Function (iPCF) bekannten Technologie gewährleisten. Insbesondere kann die echtzeitfähige Kommunikation auch dann gewährleistet werden, wenn sich mobile Teilnehmer im Funkfeld bewegen. Gleichzeitig werden die Standards IEEE 802.11 erfüllt, d.h. die drahtlose Netzwerkverbindung ist kompatibel zu Standard-WLAN-Netzen.

In einer sehr vorteilhaften Ausgestaltung sind im Rotor ein oder mehrere Not-Aus-Taster angeordnet, deren Betätigung der zentralen Steuerungseinrichtung über ein Netzwerk gemeldet werden kann, wobei eine Komponente des Netzwerkes als drahtlose Netzwerkverbindung ausgebildet ist. Solche Not-Aus-Taster sollen im Notfall ein sofortiges Stillsetzen der Windenergieanlage ermöglichen. An die Zuverlässigkeit ihrer Funktion sind höchste Anforderungen zu stellen. Dazu wird üblicherweise eine separate elektrische Verbindung vom Rotor zur zentralen Steuerungseinrichtung vorgehalten, was einen hohen Aufwand bedeutet. Wenn wie bei der Erfindung für die Kommunikation zwischen der zentralen Steuerungseinrichtung und der Steuerungseinheit im Rotor eine ausreichend sichere drahtlose Netzwerkverbindung vorgesehen ist, kann diese auch für die Weiterleitung des Signals vom

Not-Aus-Taster verwendet werden, so dass der genannte zusätzliche Aufwand für die Sicherheitskette nicht erforderlich ist.

In einer sehr vorteilhaften Ausgestaltung sind die erste und die zweite Sende- und Empfangseinrichtung jeweils in mehrfacher Ausführung vorgesehen. Durch diese redundante Ausführung der Sende- und Empfangseinrichtungen, gegebenenfalls einschließlich der jeweils zugehörigen Antennen, kann die drahtlose Netzwerkverbindung auch bei einem Ausfall einer Sende- und Empfangseinrichtung aufrechterhalten werden.

Gemäß einer Ausgestaltung ist die erste Sende- und Empfangseinrichtung über ein drahtgebundenes Netzwerk mit der zentralen Steuerungseinrichtung verbunden, wobei das drahtgebundene Netzwerk auch als Lichtwellenleiterverbindung ausgebildet sein kann. In einer weiteren vorteilhaften Ausgestaltung ist die zweite Sende- und Empfangseinrichtung über ein drahtgebundenes Netzwerk mit der Steuerungseinheit im Rotor verbunden, wobei auch dieses drahtgebundene Netzwerk als Lichtwellenleiterverbindung ausgebildet sein kann. Insbesondere ist vorgesehen, auch diese drahtgebundenen Netzwerke in Verbindung mit einem sicherheitsgerichteten Kommunikationsprotokoll zu verwenden. Dadurch kann einerseits die Bandbreite der drahtlosen Netzwerkverbindung, andererseits auch die hohe Zuverlässigkeit und Übertragungssicherheit über die gesamte Datenverbindung zwischen zentraler Steuerungseinrichtung und Steuerungseinheit im Rotor ausgenutzt werden.

In einer vorteilhaften Ausgestaltung ist die elektrische Leitung zwischen den beiden Überwachungs- und Kommunikationseinrichtungen ein Bussystem nach dem Master/Slave-Prinzip, wobei die Überwachungs- und Kommunikationseinrichtung an oder in der Gondel der Master, die Überwachungs- und Kommunikationseinrichtung an oder in dem Rotor der Slave ist. Dies ermöglicht eine effektive, von der an oder in der Gondel untergebrachten Überwachungs- und Kommunikationseinrichtung initiierte Datenkommunikation.

Gemäß einer vorteilhaften Ausgestaltung weist die Blattverstelleinrichtung eine Überwachungseinrichtung auf, die den tatsächlichen Blatteinstellwinkel ständig ermitteln und mit einem von der zentralen Steuerungseinrichtung übertragenen Sollwert vergleichen kann. Es ist also eine separate Überwachungseinrichtung vorgesehen, die wie auch die Überwachungs- und Kommunikationseinrichtungen der Sende- und Empfangseinrichtungen aus sicherheitsgerichteten Komponenten aufgebaut sein kann. Die Überwachungseinrichtung ist zusätzlich zu einer Regelungseinrichtung für den Blatteinstellwinkel vorhanden. Das Ziel des Ist-Soll-Vergleichs, der von der Überwachungseinrichtung ausgeführt wird, ist nicht die Regelung des Blatteinstellwinkels selbst, sondern das Erkennen von Fehlern der von der zentralen Steuerungseinrichtung übernommenen Regelungsfunktion. Durch die Überwachungseinrichtung für die Blattverstelleinrichtung wird eine zusätzliche Sicherheitsstufe in das Blattverstellsystem eingeführt, die ein willkürliches und von einem Steuerbefehl abweichendes Verstellen des Blatteinstellwinkels sicher verhindern kann.

Die beschriebene Überwachungseinrichtung für die Blattverstelleinrichtung kann auch unabhängig von der drahtlosen Netzwerkverbindung zwischen zentraler Steuerungseinrichtung und Steuerungseinheit im Rotor sinnvoll eingesetzt werden. Auch in Verbindung mit anderen bekannten Kommunikationstechniken zwischen zentraler Steuerungseinrichtung und Steuerungseinheit bietet die Überwachung der Blattverstelleinrichtung Vorteile für die Betriebssicherheit der Windenergieanlage.

In einer vorteilhaften Ausgestaltung weist die Überwachungseinrichtung der Blattverstelleinrichtung einen oder mehrere separate Sensoren für den Blatteinstellwinkel und/oder für den Strom eines Motors der Blattverstelleinrichtung und/oder für die Spannung eines Motors der Blattverstelleinrichtung und/oder für die Drehzahl eines Motors der Blattverstelleinrichtung auf, wobei der separate Sensor bzw. die separaten Sensoren unabhängig von den von der zentralen Steuerungseinrichtung ausgewerteten Sensoren sind. Bei dieser Ausgestaltung findet somit eine von den Eingangsgrößen der zentralen Steuerungseinrichtung unabhängige Bestimmung des tatsächlichen Blatteinstellwinkels statt. Dadurch kann die Funktion der Blattverstelleinrichtung einschließlich der zugeordneten, von der zentralen Steuerungseinrichtung ausgewerteten Sensoren zuverlässig überwacht werden.

In einer vorteilhaften Ausgestaltung ist die Überwachungseinrichtung der Blattverstelleinrichtung dazu ausgebildet, die von dem separaten Sensor bzw. den separaten Sensoren erfassten Daten und die von der zentralen Steuerungseinrichtung übertragenen Sollwerte und/oder Steuerbefehle ständig auf Plausibilität zu überprüfen und im Falle von Abweichungen das zugehörige Rotorblatt durch Verstellen des Blatteinstellwinkels in eine Sicherheitsposition zu bringen. Im Gegensatz zu einer herkömmlichen Verstelleinrichtung für den Blatteinstellwinkel, die im wesentlichen einen Vergleich von Soll- und Istwerten durchführt, kann die Überwachungseinrichtung so ausgebildet sein, dass sie komplexe Zusammenhänge zwischen den Mess- und Sollwerten und/oder Steuerbefehlen analysieren kann. Beispielsweise kann ein von der zentralen Steuerungseinrichtung übertragener Steuerbefehl, die Rotorblätter um einen bestimmten Winkel zu verfahren, mit der von den separaten Sensoren ermittelten Verstellgeschwindigkeit und den elektrischen Messwerten des für die Verstellung verwendeten Motors in Beziehung gesetzt werden. Dadurch können beispielsweise Schwergängigkeiten in einem Getriebe oder sonstige Beeinträchtigungen der Funktion der Verstelleinrichtung erkannt werden. Sofern die Überwachungseinrichtung eine Abweichung feststellt, die auf eine die Sicherheit des Betriebs beeinträchtigende Störung hinweist, kann sie das zugehörige Rotorblatt bzw. alle Rotorblätter in eine Sicherheitsposition, beispielsweise in Fahnenstellung, bringen. Ebenfalls denkbar und vorteilhaft ist eine gezielte Fortsetzung des Betriebs in einem Bereich mit geringerer Belastung, etwa durch eine Absenkung der Leistung.

In einer vorteilhaften Ausgestaltung ist für jedes Rotorblatt eine separate Blattverstelleinrichtung mit Überwachungseinrichtung vorgesehen. Dies ermöglicht eine noch genauere Überwachung der Vorgänge bei der Blattverstellung.

Gemäß einer vorteilhaften Ausgestaltung sind die Überwachungseinrichtungen für jedes Rotorblatt über ein Netzwerk miteinander verbunden, das ein sicherheitsgerichtetes Kommunikationsprotokoll nutzt. Bevorzugt wird ein Ringnetzwerk eingesetzt. Dadurch ist eine aktive Kommunikation zwischen den Überwachungseinrichtungen in der Nabe möglich. Insbesondere kann ein Vergleich und gegebenenfalls Abgleich zwischen den erfassten Messdaten vorgenommen und eine dahingehend erweiterte Plausibilitätskontrolle durchgeführt werden.

In einer vorteilhaften Ausgestaltung weist die Sende- und Empfangseinrichtung an oder in dem Rotor mindestens eine Antenne auf, die aus einem Leckwellenleiter besteht und im Bereich der der Gondel zugewandten Seite der Nabe angeordnet ist. Bevorzugt ist der Leckwellenleiter ein Koaxialkabel mit kleinen Öffnungen im Schirm, ein sogenanntes RCoax-Kabel. Grundsätzlich können für die Sende- und Empfangseinrichtungen beliebige Antennen, etwa geeignete Stabantennen, verwendet werden. Die Ausgestaltung mit einem Leckwellenleiter ermöglicht jedoch eine bessere Abstimmung auf die Funkstrecke und die im Bereich der Gondel einer Windenergieanlage unvermeidlichen, starken elektromagnetischen Störeinflüsse. Durch die Anordnung im Bereich der der Gondel zugewandten Seite der Nabe kann die Funkstrecke in ihrer Ausdehnung auf ein Minimum reduziert werden.

Gemäß einer vorteilhaften Ausgestaltung ist die Antenne ringförmig und symmetrisch zur Rotorwelle angeordnet. Diese Anordnung führt dazu, dass die Bedingungen der Funkverbindung von der Drehbewegung des Rotors weitgehend unabhängig sind. Insbesondere der Abstand zwischen der Antenne am Rotor und der an oder in der Gondel angeordneten weiteren Antenne bleibt von der Drehbewegung unbeeinflusst.

Bevorzugt wird die Antenne für die Sende- und Empfangseinrichtung an oder in dem Rotor und/oder an oder in der Gondel mit einem separaten Blitzschutz ausgerüstet. Diese Maßnahme dient der Betriebssicherheit.

In einer vorteilhaften Ausgestaltung weist die Sende- und Empfangseinrichtung an oder in der Gondel mindestens eine Antenne auf, die aus einem Leckwellenleiter besteht und im Bereich der der Nabe zugewandten Seite der Gondel nahe der Nabe angeordnet ist. Diese Ausgestaltung dient der Minimierung von Störeinflüssen auf die drahtlose Netzwerkverbindung.

In einer vorteilhaften Ausgestaltung ist die zentrale Steuerungseinrichtung und/oder die Steuerungseinheit und/oder die Überwachungs- und Kommunikationseinrichtungen und/oder die Netzwerkverbindungen hochverfügbar und/oder fehlersicher ausgeführt. Hochverfügbar bedeutet insbesondere, dass beispielsweise zwei Mikroprozessoren oder Steuerungen gleichen Typs verwendet werden und im Fehlerfall von einem Hauptsystem auf ein Reservesystem umgeschaltet werden kann. Dabei können derzeit Umschaltzeiten von weniger als 10 ms erreicht werden, was einen fortlaufenden Betrieb einer Windenergieanlage ermöglicht. Das interne Betriebssystem eines solchen hochverfügbaren Systems sorgt dafür, dass alle Befehle, deren Ausführung unterschiedliche Zustände in den beiden Alternativsystemen hervorrufen würde, miteinander synchron ausgeführt werden. Fehlersicher bedeutet, dass ein Fehler nicht zu Unfällen oder Schäden führen kann. Fehlersichere Systeme sollen höchste Sicherheit für Mensch, Maschine und Umwelt sicherstellen. Häufig werden fehlersichere Systeme auch als sicherheitsgerichtete Systeme bezeichnet. Eine sicherheitsgerichtete Steuerung überwacht sich selbständig, erkennt Fehler eigenständig und geht unmittelbar bei Auftreten eines Fehlers in einen sicheren Zustand über oder verbleibt in einem solchen Zustand.

Das erfindungsgemäße Verfahren dient zum Betreiben einer Windenergieanlage, die eine Gondel, einen Rotor mit mindestens einem in seinem Blatteinstellwinkel verstellbaren Rotorblatt, eine zentrale Steuerungseinrichtung, die die Windenergieanlage steuert, und eine im Rotor angeordnete Steuerungseinheit, die den Blatteinstellwinkel steuert, aufweist, wobei die zentrale Steuerungseinrichtung und die Steuerungseinheit im Rotor über eine Datenverbindung, die mindestens eine gondelseitige erste Sende- und Empfangseinrichtung und mindestens eine rotorseitige zweite Sende- und Empfangseinrichtung umfasst, miteinander Daten austauschen, wobei die Daten über eine drahtlose Netzwerkverbindung mit einem sicherheitsgerichteten Kommunikationsprotokoll ausgetauscht werden, wobei der ersten und der zweiten Sende- und Empfangseinrichtung jeweils eine Überwachungs- und Kommunikationseinrichtung zugeordnet ist, die die Funktion der Sende- und Empfangseinrichtung überwacht und im Falle eines Fehlers eine vorbestimmte Aktion einleitet. Zur Erläuterung des Verfahrens wird auf die obigen Ausführungen zur Windenergieanlage verwiesen. Nachfolgend wird ergänzend auf einige Besonderheiten des beanspruchten Verfahrens eingegangen.

Die drahtlose Netzwerkverbindung weist eine erste, an oder in der Gondel angeordnete und eine zweite, an oder in dem Rotor angeordnete Sende- und Empfangseinrichtung auf, die jeweils einer Überwachungs- und Kommunikationseinrichtung zugeordnet sind, die die ordnungsgemäße Funktion der zugehörigen Sende- und Empfangseinrichtungen überwachen und im Falle eines Fehlers z.B. eine Fehlermeldung absetzen oder eine sonstige Aktion einleiten kann.

Erfmdungsgemäß sind die beiden Überwachungs- und Kommunikationseinrichtungen über eine einen Schleifring aufweisende elektrische Leitung miteinander verbunden, über die sie ständig Statusmeldungen miteinander austauschen.

Gemäß einer vorteilhaften Ausgestaltung tauschen die beiden Überwachungs- und Kommunikationseinrichtungen im Falle einer Störung der drahtlosen Netzwerkverbindung nicht nur Statusinformationen, sondern auch Steuerungsdaten über die elektrische Verbindung aus.

In einer weiteren vorteilhaften Ausgestaltung wird im Falle einer längeren und/oder schwereren Störung des Datenaustauschs über die drahtlose Netzwerkverbindung die elektrische Verbindung zwischen den beiden Überwachungs- und Kommunikationseinrichtungen für ein gesteuertes Herunterfahren der Windenergieanlage genutzt. D.h., dass nicht bei jeder Störung des Datenaustauschs über die drahtlose Netzwerkverbindung die Windenergieanlage heruntergefahren werden muss. Sofern es sich um eine als leicht eingestufte oder sehr kurze Störung handelt, kann der Betrieb der Windenergieanlage durch die Übertragung von Steuerdaten über die elektrische Verbindung zwischen den beiden Überwachungs- und Kommunikationseinrichtungen aufrechterhalten werden. Sofern es sich um eine längere und/oder als schwer eingestufte Störung der drahtlosen Netzwerkverbindung handelt, ist es ebenfalls nicht erforderlich, einen sofortigen Notstopp auszuführen, sondern es ist immer noch ein gesteuertes Herunterfahren der Windenergieanlage möglich. Dies ist ein wesentlicher Vorteil mit unmittelbaren positiven Auswirkungen auf die Lebensdauer der Windenergieanlage.

Nachfolgend wird die Erfindung anhand eines in vier Figuren dargestellten Ausführungsbeispiels näher erläutert. Es zeigen:
- Fig. 1: Gondel, Rotor und zentrale Steuerungseinrichtung einer Windenergieanlage nach der Erfindung in einer stark vereinfachten, schematischen Darstellung;
- Fig. 2: eine schematische Blockdarstellung ausgewählter Komponenten einer erfindungsgemäßen Windenergieanlage;
- Fig.3 3: Einzelheiten der drahtlosen Netzwerkverbindung in einer stark vereinfachten, schematischen Darstellung; und
- Fig. 4: Einzelheiten der Steuerungseinheit im Rotor der erfindungsgemäßen Windenergieanlage in einer stark vereinfachten, schematischen Blockdarstellung.

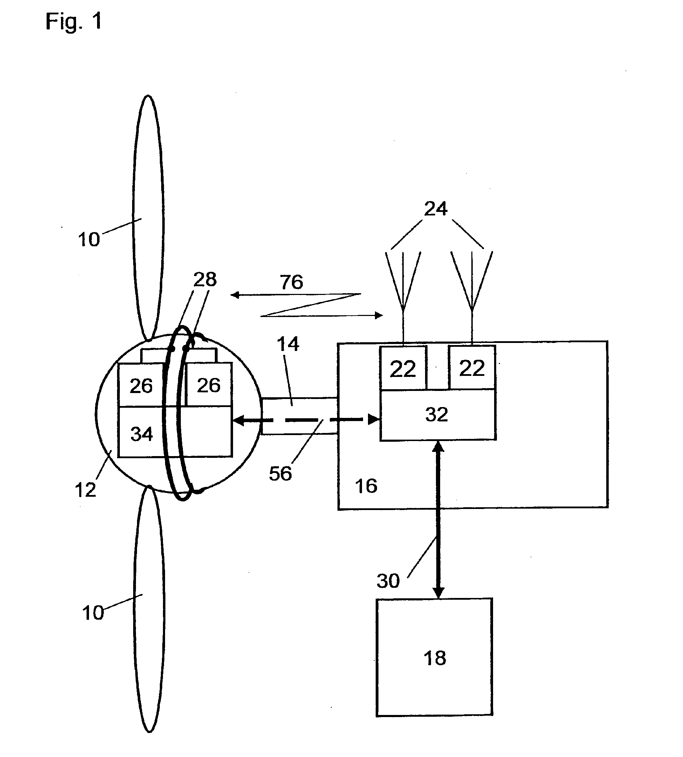

Die in Fig. 1 dargestellte Windenergieanlage hat einen Rotor, bestehend aus einer Nabe 12 und Rotorblättern 10, die in ihrem Blatteinstellwinkel verstellbar sind. Eine Rotorwelle 14 verbindet den Rotor mit einer Gondel 16, die auf dem nicht dargestellten Turm der Windenergieanlage gelagert ist und unter anderem einen Generator zur Umwandlung der vom Rotor aufgenommenen Windenergie in elektrische Energie aufweist. Eine zentrale Steuerungseinrichtung 18 der Windenergieanlage befindet sich im Turm oder der Gondel. Sie ist über ein drahtgebundenes Netzwerk 30 mit einer Überwachungs- und Kommunikationseinrichtung 32 verbunden, die zwei ersten Sende- und Empfangseinrichtungen 22 zugeordnet ist und deren ordnungsgemäße Funktion überwacht, wobei die ersten Sende- und Empfangseinrichtungen 22 und die Überwachungs- und Kommunikationseinrichtung 32 in der Gondel angeordnet sind. Jede Sende- und Empfangseinrichtung 22 weist eine Antenne 24 auf, die mit Montagefüßen auf der Gondel montiert ist. Die Montagefüße sind in der Gondel verankert. Jede Antenne weist eine nicht dargestellte Blitzschutzeinrichtung auf.

In der Nabe 12 des Rotors sind zwei zweite Sende- und Empfangseinrichtungen 26 angeordnet, die jeweils mit einer Antenne 28 verbunden sind. Die Antennen 28 sind bevorzugt als Ringantenne ausgebildet. Jede Ringantenne besteht aus einem sogenannten Leckwellenleiter, oft auch als RCoax-Kabel bezeichnet, der symmetrisch zur Rotorwelle 14 ringförmig um die Nabe 12 bzw. um die Rotorwelle 14 herum auf der der Gondel 16 zugewandten Seite der Nabe 12 angeordnet ist. Dabei halten die Ringantennen bevorzugt einen Abstand zur Nabe bzw. zu sonstigen metallischen Gegenständen von ungefähr 50 cm ein. Auch diese Antennen weisen eine Blitzschutzeinrichtung auf. Die Verbindung zwischen den Antennen 28 und den beiden zweiten Sende- und Empfangseinrichtungen 26 erfolgt über jeweils ein Kabel, das so durch die Nabe hindurchgeführt ist, dass kein Wasser in die Nabe eindringen kann. Alternativ zu den Ringantennen können auch drei bis vier Einzelantennen dicht an der der Gondel 16 zugewandten Seite der Nabe 12 angeordnet werden. Auch den zweiten Sende- und Empfangseinrichtungen 26 ist eine Überwachungs- und Kommunikationseinrichtung 34 zugeordnet.

Wie der Figur 1 zu entnehmen ist, sind die ersten Sende- und Empfangseinrichtungen 22 und die zweiten Sende- und Empfangseinrichtungen 26 einschließlich der zugehörigen Antennen 24 bzw. 28 redundant ausgeführt.

Über eine drahtlose Netzwerkverbindung 76 sind die ersten Sende und Empfangseinrichtungen 22 mit den zweiten Sende- und Empfangseinrichtungen 26 verbunden.

Eine elektrische Verbindung 56 verbindet die Überwachungs- und Kommunikationseinrichtung 32 in der Gondel 16 mit der Überwachungs- und Kommunikationseinrichtung 34 in der Nabe 12. Diese elektrische Verbindung 56 weist einen Schleifring auf.

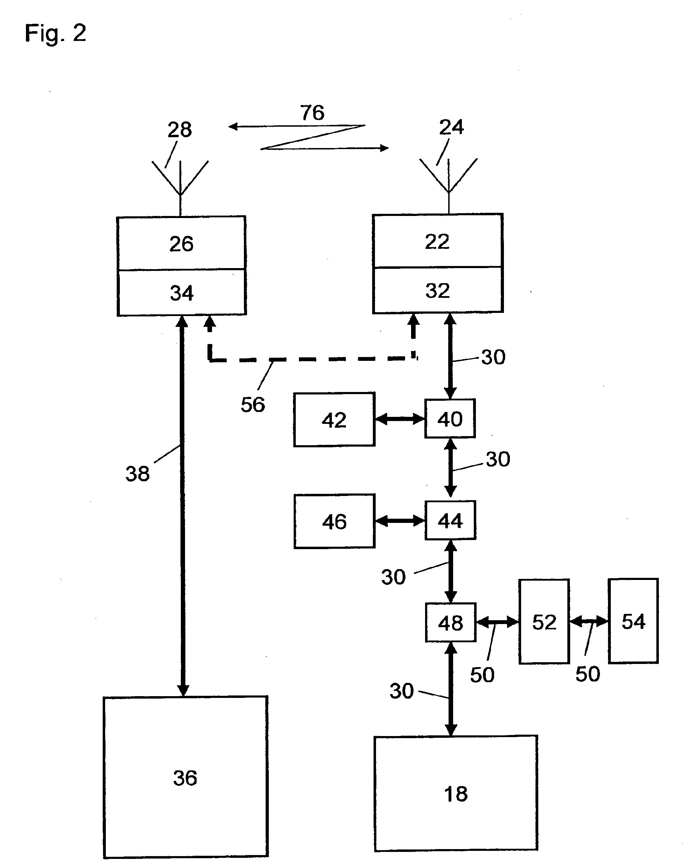

Fig. 2 zeigt weitere Bestandteile des in Fig. 1 gezeigten Systems. Die Überwachungs- und Kommunikationseinrichtung 34 ist mit der in Fig. 2 nur angedeuteten Steuerungseinheit 36 im Rotor der Windenergieanlage über ein weiteres, drahtgebundenes Netzwerk 38 verbunden.

Der Hauptumrichter 42 der Windenergieanlage ist über einen Netzwerkkoppler 40 mit dem drahtgebundenen Netzwerk 30 verbunden. Über einen weiteren Netzwerkkoppler 44 ist das drahtgebundene Netzwerk 30 mit Sensoren 46 verbunden, deren Messwerte somit von der zentralen Steuerungseinrichtung 18 über das Netzwerk 30 abgefragt werden können. Ein weiterer Netzwerkkoppler 48 dient zum Anschluss eines zusätzlichen Netzwerkastes oder Bussystems 50, über das Standard-Eingabe/Ausgabegeräte 52 und zusätzlich sicherheitsrelevante Eingabe/Ausgabegeräte 54 mit der Netzwerkverbindung 30 verbunden sind. Zu den sicherheitsrelevanten Eingabe/Ausgabegeräten 54 zählen insbesondere ein Not-Aus-Taster und eine Vibrationsmesseinrichtung.

Die zentrale Steuerungseinrichtung 18 ist bevorzugt fehlersicher und/oder hochverfügbar ausgeführt. Auch die Komponenten der Überwachungs- und Kommunikationseinrichtung 32, 34 sind bevorzugt fehlersicher und/oder hochverfügbar ausgeführt.

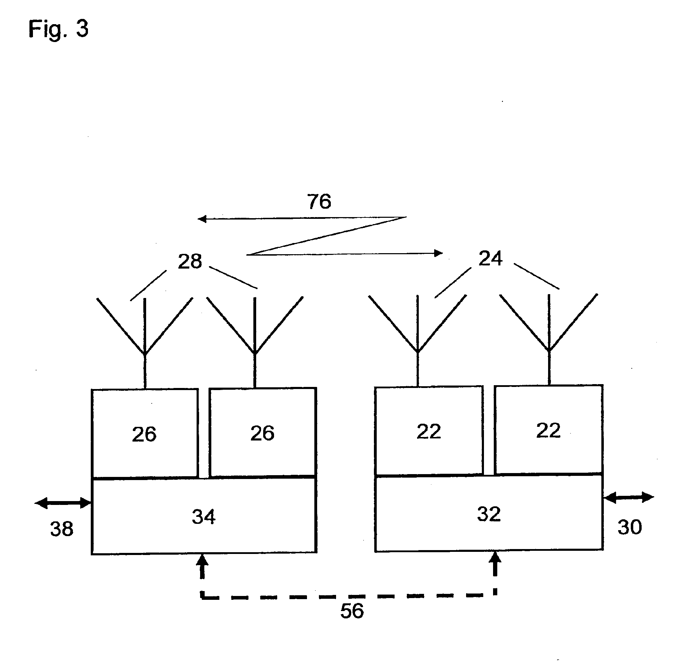

Die Kommunikation zwischen den ersten Sende- und Empfangseinrichtungen 22 und den zweiten Sende- und Empfangseinrichtungen 26 ist nochmals in Fig. 3 dargestellt. Gut zu erkennen ist der redundante Aufbau der Sende- und Empfangseinrichtungen 22 bzw. 26 einschließlich der zugehörigen Antennen. Jedem Paar von Sende- und Empfangseinrichtungen 22 bzw. 26 ist eine Überwachungs- und Kommunikationseinrichtung 32 bzw. 34 zugeordnet. Zwischen den beiden Überwachungs- und Kommunikationseinrichtungen 32 und 34 besteht alternativ zu der drahtlosen Netzwerkverbindung 76 eine elektrische Verbindung 56, die einen Schleifring aufweist und im "Hot-Standby"-Betrieb zum ständigen Austausch von Statusinformationen mit einer niedrigen Datenrate verwendet wird. Hinsichtlich dieser elektrischen Verbindung 56 ist die den ersten Sende- und Empfangseinrichtungen 22 zugeordnete Überwachungs- und Kommunikationseinrichtung 32 als Master ausgeführt, die den zweiten Sende- und Empfangseinrichtungen 26 zugeordnete Überwachungs- und Kommunikationseinrichtung 34 als Slave. Im Störfall der drahtlosen Netzwerkverbindung 76 können die für den Betrieb der Windenergieanlage erforderlichen Daten über die elektrische Verbindung 56 übertragen werden. Diese Betriebsart wird jedoch nur für einen vorbestimmten, kurzen Zeitraum aufrechterhalten. Sofern die drahtlose Netzwerkverbindung 76 nach Ablauf dieses Zeitraums nicht wieder hergestellt ist, wird die Windenergieanlage über die elektrische Verbindung 56 durch die zentrale Steuerungseinrichtung 18 heruntergefahren. Es kann sogar in diesem Fall einer schweren und/oder dauerhaften Störung der drahtlosen Netzwerkverbindung 76 ein abrupter Notstopp der Windenergieanlage vermieden werden.

Die Überwachungs- und Kommunikationseinrichtung 32 ist über das drahtgebundene Netzwerk 30 mit der zentralen Steuerungseinrichtung 18 verbunden. Die Überwachungs- und Kommunikationseinrichtung 34 ist über das drahtgebundene Netzwerk 38 mit der Steuerungseinheit 36 verbunden.

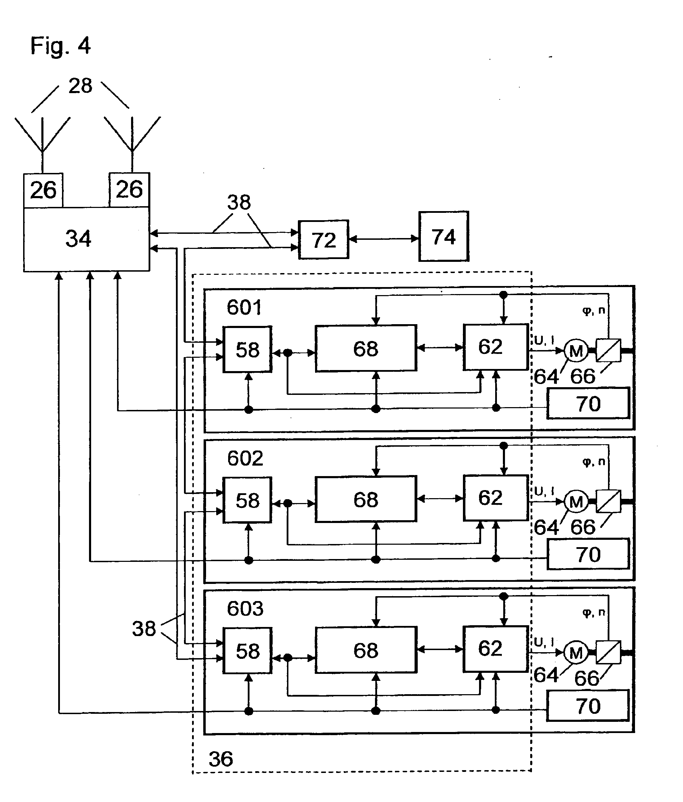

Letzteres ist auch in Fig. 4 dargestellt, in der die zweiten Sende- und Empfangseinrichtungen 26 links gezeigt sind. Das drahtgebundene Netzwerk 38 ist ringförmig ausgebildet und verbindet die Überwachungs- und Kommunikationseinheit 34 über drei Netzwerkkoppler 58 mit drei Blattverstelleinrichtungen 601, 602, 603, die jeweils einem nicht dargestellten Rotorblatt zugeordnet sind.

Jede Blattverstelleinrichtung 601, 602, 603 umfasst eine Antriebssteuereinheit 62 zur Steuerung eines Elektromotors 64, der das Rotorblatt, gegebenenfalls über ein geeignetes Getriebe, verstellen kann. Jede Blattverstelleinrichtung 601, 602, 603 weist ferner eine Überwachungseinrichtung 68 auf, die die ordnungsgemäße Funktion der Blattverstelleinrichtung überwacht. Mit der Welle des Elektromotors 64 ist eine Sensoreinheit 66 verbunden. Die von der Sensoreinheit 66 ermittelte Position und/oder Drehzahl wird an die Antriebssteuereinheit 62 und an die Überwachungseinrichtung 68 zurückgemeldet. Die Antriebssteuereinheit 62, die Überwachungseinrichtung 68 und alle sonstigen Komponenten der Blattverstelleinrichtungen 601, 602, 603 sowie die Überwachungs- und Kommunikationseinrichtung 34 werden von einem für jede Blattverstelleinrichtung 601, 602, 603 gesondert vorhandenen Energiespeicher 70 mit elektrischer Energie versorgt.

Über einen weiteren Netzwerkkoppler 72 ist das drahtgebundene Netzwerk 38 mit sicherheitsrelevanten Eingabe/Ausgabegeräten 74 gekoppelt, insbesondere mit einem Not-Aus-Taster und einem Vibrationsmelder.

## Patentansprüche

1. Windenergieanlage mit einer Gondel (16), einem Rotor, der mindestens ein in seinem Blatteinstellwinkel verstellbares Rotorblatt (10) aufweist, einer zentralen Steuerungseinrichtung (18) zur Steuerung der Windenergieanlage und einer im Rotor angeordneten Steuerungseinheit (36) zur Steuerung des Blatteinstellwinkels des mindestens einen Rotorblatts (10), wobei die zentrale Steuerungseinrichtung (18) und die Steuerungseinheit (36) im Rotor über eine Datenverbindung, die mindestens eine gondelseitige erste Sende- und Empfangseinrichtung (22) und mindestens eine rotorseitige zweite Sende- und Empfangseinrichtung (26) umfasst, miteinander Daten austauschen können, wobei zwischen der mindestens einen ersten Sende- und Empfangseinrichtung (22) und der mindestens einen zweiten Sende- und Empfangseinrichtung (26) eine drahtlose Netzwerkverbindung (76) mit einem sicherheitsgerichteten Kommunikationsprotokoll vorgesehen ist und der ersten und der zweiten Sende- und Empfangseinrichtung (22, 26) jeweils eine Überwachungs- und Kommunikationseinrichtung (32, 34) zugeordnet ist, die die Funktion der Sende- und Empfangseinrichtung (22, 26) überwachen und im Falle eines Fehlers eine vorbestimmte Aktion einleiten kann, **dadurch gekennzeichnet, dass** die Überwachungs- und Kommunikationseinrichtungen (32, 34) über eine einen Schleifring aufweisende elektrische Verbindung (56) zum ständigen Austausch von Statusmeldungen miteinander verbunden sind.

2. Windenergieanlage nach Anspruch 1, **dadurch gekennzeichnet, dass** im Rotor mindestens ein Not-Aus-Taster (74) angeordnet ist, dessen Betätigung der zentralen Steuerungseinrichtung (18) über ein Netzwerk gemeldet werden kann, wobei die drahtlose Netzwerkverbindung (76) eine Komponente dieses Netzwerkes darstellt.

3. Windenergieanlage nach einem der Ansprüche 1 oder 2, **dadurch gekennzeichnet, dass** die erste und die zweite Sende- und Empfangseinrichtung (22, 26) jeweils in redundanter Ausführung vorgesehen sind.

4. Windenergieanlage nach einem der Ansprüche 1 bis 3, **dadurch gekennzeichnet, dass** die Steuerungseinheit (36) mindestens eine Blattverstelleinrichtung (601, 602, 603) aufweist, der eine Überwachungseinrichtung (68) zugeordnet ist, die den tatsächlichen Blatteinstellwinkel ständig ermitteln und mit einem von der zentralen Steuerungseinrichtung (18) vorgegebenen Sollwert vergleichen kann.

5. Windenergieanlage nach Anspruch 4, **dadurch gekennzeichnet, dass** die der Blattverstelleinrichtung (601, 602, 603) zugeordnete Überwachungseinrichtung (68) einen oder mehrere separate Sensoren für den Blatteinstellwinkel und/oder für den Strom eines Elektromotors (64) der Blattverstelleinrichtung (601, 602, 603) und/oder für die Spannung eines Elektromotors (64) der Blattverstelleinrichtung (601, 602, 603) und/oder für die Drehzahl eines Elektromotors (64) der Blattverstelleinrichtung (601, 602, 603) aufweist, wobei der separate Sensor bzw. die separaten Sensoren unabhängig von den von der zentralen Steuerungseinrichtung (18) ausgewerteten Sensoren sind.

6. Windenergieanlage nach Anspruch 4 oder 5, **dadurch gekennzeichnet, dass** die der Blattverstelleinrichtung (601, 602, 603) zugeordnete Überwachungseinrichtung (68) dazu ausgebildet ist, die von dem separaten Sensor bzw. den separaten Sensoren erfassten Daten und die von der zentralen Steuerungseinrichtung (18) übertragenen Sollwerte und/oder Steuerbefehle ständig auf Plausibilität zu überprüfen und im Falle von Abweichungen das zugehörige Rotorblatt (10) durch Verstellen des Blatteinstellwinkels in eine Sicherheitsposition zu bringen.

7. Windenergieanlage nach einem der Ansprüche 1 bis 6, **dadurch gekennzeichnet, dass** die zweite Sende- und Empfangseinrichtung (26) an oder in dem Rotor mindestens eine Antenne (28) aufweist, die aus einem Leckwellenleiter besteht und im Bereich der der Gondel (16) zugewandten Seite der Nabe (12) angeordnet ist.

8. Windenergieanlage nach einem der Ansprüche 1 bis 7, **dadurch gekennzeichnet, dass** die Sende- und Empfangseinrichtung (22) an oder in der Gondel mindestens eine Antenne (24) aufweist, die aus einem Leckwellenleiter besteht und im Bereich der der Nabe (12) zugewandten Seite der Gondel (16) nahe der Nabe (12) angeordnet ist.

9. Verfahren zum Betreiben einer Windenergieanlage mit einer Gondel, einem Rotor, der mindestens ein in seinem Blatteinstellwinkel verstellbares Rotorblatt (10) aufweist, einer zentralen Steuerungseinrichtung (18), die die Windenergieanlage steuert, und einer im Rotor angeordneten Steuerungseinheit (36), die den Blatteinstellwinkel des mindestens einen Rotorblatts (10) steuert, wobei die zentrale Steuerungseinrichtung (18) und die Steuerungseinheit (36) im Rotor über eine Datenverbindung, die mindestens eine gondelseitige erste Sende- und Empfangseinrichtung (22) und mindestens eine rotorseitige zweite Sende- und Empfangseinrichtung (26) umfasst, miteinander Daten austauschen, wobei die Daten über eine drahtlose Netzwerkverbindung (76) mit einem sicherheitsgerichteten Kommunikationsprotokoll ausgetauscht werden, der ersten und der zweiten Sende- und Empfangseinrichtung (22, 26) jeweils eine Überwachungs- und Kommunikationseinrichtung (32, 34) zugeordnet ist, die die Funktion der Sende- und Empfangseinrichtung (22, 26) überwacht und im Falle eines Fehlers eine vorbestimmte Aktion einleitet und die Überwachungs- und Kommunikationseinrichtungen (32, 34) über eine einen Schleifring aufweisende elektrische Verbindung (56) miteinander verbunden sind, über die sie ständig Statusmeldungen miteinander austauschen.

10. Verfahren nach Anspruch 9, **dadurch gekennzeichnet, dass** im Rotor mindestens ein Not-Aus-Taster (74) angeordnet ist, dessen Betätigung der zentralen Steuerungseinrichtung (18) über ein Netzwerk gemeldet wird, wobei die drahtlose Netzwerkverbindung (76) eine Komponente dieses Netzwerkes darstellt.

11. Verfahren nach Anspruch 9, **dadurch gekennzeichnet, dass** die beiden Überwachungs- und Kommunikationseinrichtungen (32, 34) im Falle einer Störung der drahtlosen Netzwerkverbindung (76) nicht nur Statusinformationen, sondern auch Steuerungsdaten über die elektrische Verbindung (56) übertragen.

12. Verfahren nach einem der Ansprüche 9 bis 11, **dadurch gekennzeichnet, dass** die Blattverstelleinrichtung (601, 602, 603) jeweils eine zugeordnete Überwachungseinrichtung (68) aufweist, die den tatsächlichen Blatteinstellwinkel und/oder dessen Änderung ständig ermittelt und mit einem von der zentralen Steuerungseinrichtung (18) übertragenen Sollwert und/oder Steuerbefehl vergleicht.

13. Verfahren nach Anspruch 12, **dadurch gekennzeichnet, dass** die Blattverstelleinrichtung (601, 602, 603) im Falle einer Abweichung zwischen den von der zentralen Steuerungseinrichtung (18) übertragenen Sollwerten und/oder Steuerbefehlen und dem von der zugeordneten Überwachungseinrichtung (68) erfassten tatsächlichen Blatteinstellwinkel und/oder dessen Änderung das mindestens eine Rotorblatt (10) durch Verstellen des Blatteinstellwinkels in eine Sicherheitsposition fährt.

## Claims

1. A wind turbine with a nacelle (16), a rotor, which features at least one rotor blade (10) adjustable in its blade pitch angle, a central control device (18) for controlling the wind turbine and a control unit (36) disposed in the rotor for controlling the blade pitch angle of the at least one rotor blade (10), wherein the central control device (18) and the control unit (36) in the rotor can exchange data with each other via a data link, which comprises at least one first sending and receiving device (22) at the nacelle side and at least one second sending and receiving device (26) at the rotor side, wherein a wireless network connection (76) with a safety-oriented communication protocol is provided between the at least one first sending and receiving device (22) and the at least one second sending and receiving device (26), and that one monitoring- and communication device (32, 34) at a time is associated to the first and to the second sending and receiving device (22, 26), which can monitor the function of the sending and receiving device (22, 26) and initiate a predetermined action in the case of an error, **characterized in that** the monitoring- and communication devices (32, 34) are connected with each other via an electric connection (56) featuring a slip ring for continuously exchanging status records.

2. A wind turbine according to claim 1, **characterised in that** at least one emergency shut-down push button switch (74) is disposed in the rotor, the actuation of which can be notified to the central control device (18) via a network, wherein the wireless network connection (76) represents a component of this network.

3. A wind turbine according to any one of claims 1 or 2, **characterised in that** the first and the second sending and receiving device (22, 26) are both provided in a redundant realisation.

4. A wind turbine according to any one of claims 1 to 3, **characterised in that** the control unit (36) features at least one blade adjustment device (601, 602, 603) to which a monitoring device (68) is associated which can detect the real blade pitch angle continuously and compare it with a desired value preset by the central control device (18).

5. A wind turbine according to claim 4, **characterised in that** the monitoring device (68) associated to the blade adjustment device (601, 602, 603) features one or more separate sensors for the blade pitch angle, and/or for the current of an electric motor (64) of the blade adjustment device (601, 602, 603) and/or for the voltage of an electric motor (64) of the blade adjustment device (601, 602, 603) and/or for the rotational speed of an electric motor (64) of the blade adjustment device (601, 602, 603), wherein the separate sensor or the separate sensors, respectively, are independent from the sensors analysed by the central control device (18).

6. A wind turbine according to claim 4 or 5, **characterised in that** the monitoring device (68) associated to the blade adjustment device (601, 602, 603) is realised to continuously check the data captured by the separate sensor or the separate sensors, respectively, and the desired values and/or control commands transmitted by the central control device (18) for plausibility, and to set the associated rotor blade (10) into a safety position by adjusting the blade pitch angle in the case of deviations.

7. A wind turbine according to any one of claims 1 to 6, **characterised in that** the second sending and receiving device (26) on or in the rotor features at least one antenna (28), which consists of a leaky waveguide and is disposed in the region of that side of the hub (12) which faces the nacelle (16).

8. A wind turbine according to any one of claims 1 to 7, **characterised in that** the sending and receiving device (22) on or in the nacelle features at least one antenna (24), which consists of a leaky waveguide and is disposed near to the hub (12) in the region of that side of the nacelle (16) which faces the hub (12).

9. A method for the operation of a wind turbine with a nacelle, a rotor which features at least one rotor blade (10) adjustable in its blade pitch angle, a central control device (18) which controls the wind turbine, and a control unit (36) disposed in the rotor which controls the blade pitch angle of the at least one rotor blade (10), wherein the central control device (18) and the control unit (36) in the rotor exchange data with each other via a data link which comprises at least one first sending and receiving device (22) at the nacelle side and at least one second sending and receiving device (26) at the rotor side, **characterised in that** the data are exchanged via a wireless network connection (76) with a safety-oriented communication protocol, wherein one monitoring- and communication device (32, 34) at a time is associated to the first and to the second sending and receiving device (22, 26), which monitors the function of the sending and receiving device (22, 26) and initiates a predetermined action in the case of an error, and the monitoring- and communication devices (32, 34) are connected with each other via an electric connection (56) featuring a slip ring via which they continuously exchange status records.

10. A method according to claim 9, **characterised in that** at least one emergency shut-down push button switch (74) is disposed in the rotor, the actuation of which is notified to the central control device (18) via a network, wherein the wireless network connection (76) represents a component of this network.

11. A method according to claim 9, **characterised in that** in the case of a breakdown of the wireless network connection (76), the two monitoring- and communication devices (32, 34) do not only transmit status information but also control data via the electric connection (56).

12. A method according to any one of claims 9 to 11, **characterised in that** each of the blade adjustment devices (601, 602, 603) features one associated monitoring device (68) at a time, which continuously detects the real blade pitch angle and/or the change thereof and compares it with a desired value and/or a control command transmitted by the central control device (18).

13. A method according to claim 12, **characterised in that** in the case of a deviation between the desired values and/or control commands transmitted by the central control device (18) and the real blade pitch angle captured by the associated monitoring device (68) and/or the change thereof, the blade adjustment device (601, 602, 603) sets the associated at least one rotor blade (10) into a safety position by adjusting the blade pitch angle.

## Revendications

1. Éolienne avec une nacelle (16), un rotor présentant au moins une pale de rotor (10) réglable quant à son angle de réglage de pale, un dispositif de commande central (18) pour la commande de l'éolienne, et une unité de commande (36) agencée dans le rotor pour la commande de l'angle de réglage de pale de l'au moins une pale de rotor (10), dans laquelle le dispositif de commande central (18) et l'unité de commande (36) dans le rotor peuvent échanger des données entre eux par le biais d'une liaison de données comprenant au moins un premier dispositif émetteur-récepteur (22) côté nacelle et au moins un deuxième dispositif émetteur-récepteur (26) côté rotor, dans laquelle il est prévu une connexion réseau sans fil (76) entre l'au moins un premier dispositif émetteur-récepteur (22) et l'au moins un deuxième dispositif émetteur-récepteur (26), avec un protocole de communication de sécurité, et dans laquelle un dispositif de surveillance et de communication (32, 34) est respectivement attribué au premier et au deuxième dispositif émetteur-récepteur (22, 26), pour surveiller le fonctionnement du dispositif émetteur-récepteur (22, 26) et lancer une action prédéterminée en cas d'erreur, **caractérisée en ce que** les dispositifs de surveillance et de communication (32, 34) sont reliés entre eux par le biais d'une liaison électrique (56) présentant une bague collectrice, pour échanger continuellement des messages de statut.

2. Éolienne selon la revendication 1, **caractérisée en ce qu'**au moins un interrupteur d'arrêt d'urgence (74) est agencé dans le rotor, dont l'actionnement peut être indiqué au dispositif de commande central (18) par le biais d'un réseau, sachant que la connexion réseau sans fil (76) constitue un composant de ce réseau.

3. Éolienne selon l'une des revendications 1 ou 2, **caractérisée en ce que** les premier et deuxième dispositifs émetteur-récepteur (22, 26) sont conçus respectivement de façon redondante.

4. Éolienne selon l'une des revendications 1 à 3, **caractérisée en ce que** l'unité de commande (36) présente au moins un dispositif de réglage de pale (601, 602, 603), auquel est attribué un dispositif de surveillance (68) capable de déterminer en continu l'angle de réglage réel de la pale et de la comparer avec une valeur de consigne prédéfinie par le dispositif de commande central (18).

5. Éolienne selon la revendication 4, **caractérisée en ce que** le dispositif de surveillance (68) attribué au dispositif de réglage de pale (601, 602, 603) présente un ou plusieurs capteurs individuels pour l'angle de réglage de pale et/ou pour le courant d'un électromoteur (64) du dispositif de réglage de pale (601, 602, 603) et/ou pour le tension de l'électromoteur (64) du dispositif de réglage de pale (601, 602, 603) et/ou pour la vitesse de rotation de l'électromoteur (64) du dispositif de réglage de pale (601, 602, 603), sachant que le capteur individuel ou les capteurs individuels sont indépendants des capteurs exploités par le dispositif de commande central (18).

6. Éolienne selon la revendication 4 ou 5, **caractérisée en ce que** le dispositif de surveillance (68) attribué au dispositif de réglage de pale (601, 602, 603) est conçu pour vérifier continuellement les données détectées par le capteur individuel ou respectivement par les capteurs individuels, ainsi que les valeurs de consigne et/ou les ordres de commande transmis par le dispositif de commande central (18), quant à leur plausibilité, et pour mettre la pale de rotor (10) correspondante dans une position de sécurité, par un ajustement de l'angle de réglage de pale, en cas d'écart.

7. Éolienne selon l'une des revendications 1 à 6, **caractérisée en ce que** le deuxième dispositif émetteur-récepteur (26) présente au moins une antenne (28) sur ou dans le rotor, laquelle est constituée d'un guide d'ondes de fuite et agencée dans la région située du côté du moyeu (12) qui est tourné vers la nacelle (16).

8. Éolienne selon l'une des revendications 1 à 7, **caractérisée en ce que** le dispositif émetteur-récepteur (22) présente au moins une antenne (24) sur ou dans la nacelle, laquelle est constituée d'un guide d'ondes de fuite et agencée à proximité du moyeu (12), dans la région située du côté de la nacelle (16) qui est tourné vers le moyeu (12).

9. Procédé pour le fonctionnement d'une éolienne avec une nacelle, un rotor présentant au moins une pale de rotor (10) réglable quant à son angle de réglage de pale, un dispositif de commande central (18) pour la commande de l'éolienne, et une unité de commande (36) agencée dans le rotor pour la commande de l'angle de réglage de pale de l'au moins une pale de rotor (10), dans lequel le dispositif de commande central (18) et l'unité de commande (36) dans le rotor échangent des données entre eux, par le biais d'une liaison de données comprenant au moins un premier dispositif émetteur-récepteur (22) côté nacelle et au moins un deuxième dispositif émetteur-récepteur (26) côté rotor, dans lequel les données sont échangées par le biais d'une connexion réseau sans fil (76) avec un protocole de communication de sécurité, un dispositif de surveillance et de communication (32, 34) étant respectivement attribué au premier et au deuxième dispositif émetteur-récepteur (22, 26), pour surveiller le fonctionnement du dispositif émetteur-récepteur (22, 26) et lancer une action prédéterminée en cas d'erreur, et les dispositifs de surveillance et de communication (32, 34) étant reliés entre eux par le biais d'une connexion électrique (56) présentant une bague collectrice, par laquelle ils échangent continuellement entre eux des messages de statut.

10. Procédé selon la revendication 9, **caractérisé en ce qu'**au moins un interrupteur d'arrêt d'urgence (74) est installé dans le rotor, dont l'actionnement est indiqué au dispositif de commande central (18) par le biais d'un réseau, sachant que la connexion réseau sans fil (76) constitue un composant de ce réseau.

11. Procédé selon la revendication 9, **caractérisé en ce qu'**en cas de panne de la connexion réseau sans fil (76), les deux dispositifs de surveillance et de communication (32, 34) transmettent non seulement des informations de statut mais aussi des données de commande par le biais de la liaison électrique (56).

12. Procédé selon l'une des revendications 9 à 11, **caractérisé en ce que** le dispositif de réglage de pale (601, 602, 603) présente respectivement un dispositif de surveillance (68) correspondant, lequel détermine en continu l'angle de réglage réel de la pale et/ou sa modification et compare celui-ci avec une valeur de consigne et/ou un ordre de commande transmis(e) par le dispositif de commande central (18).

13. Procédé selon la revendication 12, **caractérisé en ce qu'**en cas d'écart entre les valeurs de consigne et/ou les ordres de commande transmis(es) par le dispositif de commande central (18) et l'angle de réglage de pale réel et/ou la modification de celui-ci détecté(e) par le dispositif de surveillance (68) correspondant, le dispositif de réglage de pale (601, 602, 603) amène l'au moins une pale de rotor (10) dans une position de sécurité en ajustant l'angle de réglage de pale.
